# EUROPÄISCHE PATENTSCHRIFT

(11) **EP 2 078 884 B1**
(45) Veröffentlichungstag und Bekanntmachung des Hinweises auf die Patenterteilung: **17.02.2016**
(21) Anmeldenummer: 08170896.8
(22) Anmeldetag: 08.12.2008
(51) Int. Cl.: F16H 57/04

(54) **Automatgetriebe eines Kraftfahrzeuges**
Automatic gearbox for a vehicle
Boîte de vitesse automatique d'un véhicule automobile

(30) Priorität: 09.01.2008 DE 102008000019
(43) Veröffentlichungstag der Anmeldung: 15.07.2009
(73) Patentinhaber: ZF Friedrichshafen AG, 88038 Friedrichshafen (DE)
(72) Erfinder: Müller, Thorsten, 88048 Friedrichshafen (DE); Schiele, Peter, 88079 Kressbronn (DE); Eschenbeck, Linus, 88239 Wangen (DE); Gloge, Oliver, 88045 Friedrichshafen (DE)

(56) Entgegenhaltungen:
- EP-A2- 0 926 401
- WO-A2-2006/123079
- DE-A1-102006 012 838
- US-A1- 2004 029 677

## Beschreibung

Die Erfindung betrifft ein Automatgetriebe eines durch eine Brennkraftmaschine angetriebenen Kraftfahrzeuges nach dem Oberbegriff des Patentanspruches 1 - bekannt durch die DE 10 2006 012 838 A1 der Anmelderin.

Das durch die DE 10 2006 012 838 A1 der Anmelderin bekannt gewordene Automatgetriebe weist eine von der Brennkraftmaschine des Kraftfahrzeuges antreibbare Hauptölpumpe sowie eine elektrische, d. h. durch einen Elektromotor antreibbare Zusatzölpumpe für den Getriebeölkreislauf des Automatgetriebes auf. Die mechanisch angetriebene Hauptölpumpe kann als so genannte Wandlerhalspumpe ausgebildet und koaxial zur Getriebeeingangswelle angeordnet sein. Möglich sind jedoch auch eine nicht koaxiale Anordnung und ein mechanischer Antrieb z. B. über eine Nebenwelle. Die Zusatzölpumpe, die insbesondere bei einer Start- Stopp-Automatik des Kraftfahrzeuges Verwendung findet, ist in einer Ölwanne angeordnet, die sich unterhalb des Getriebes befindet und über einen Flansch mit dem Getriebegehäuse verbunden ist. Der antreibende Elektromotor kann sich dabei entweder innerhalb oder außerhalb der Ölwanne befinden.

Es ist Aufgabe der vorliegenden Erfindung, die Einbauverhältnisse für eine Zusatzölpumpe weiter zu verbessern und den gegebenen Bauraum des Getriebes optimal auszunutzen.

Die Aufgabe der Erfindung wird durch die Merkmale des Patentanspruches 1 gelöst. Vorteilhafte Ausgestaltungen und Weiterbindungen der Erfindung ergeben sich aus den Unteransprüchen.

Erfindungsgemäß ist vorgesehen, dass die Zusatzölpumpe quer zur Fahrtrichtung des Kraftfahrzeuges innerhalb des Getriebegehäuses und/oder der Ölwanne angeordnet ist. Damit wird insbesondere in Fahrtrichtung des Kraftfahrzeuges (x-Achse des Fahrzeuges) ein Bauraumgewinn erzielt.

Das Automatgetriebe weist erfindungsgemäß eine Parksperrenvorrichtung auf, d. h. ein Parksperrenrad, welches vorzugsweise an der Abtriebswelle angeordnet ist, sowie eine Parksperrenklinke, welche in das Parksperrenrad eingreift. Erfindungsgemäß ist die Zusatzölpumpe unterhalb der Parksperrenvorrichtung angeordnet. Damit wird der Einbauraum des Getriebes in diesem Bereich vorteilhaft ausgenutzt. Dabei ist die Bauart des Automatgetriebes beliebig. So kann das Automatgetriebe beispielsweise als Stufenautomatgetriebe, als automatisiertes Schaltgetriebe, als Doppelkupplungsgetriebe oder auch als stufenloses Getriebe mit und ohne Leistungsverzweigung ausgeführt sein, ohne oder auch mit einem zusätzlichen Hybridmodul bzw. Hybridantrieb.

Die Zusatzölpumpe kann vorteilhaft mit einem Elektromotor zu einer Baueinheit, einem Pumpenaggregat, verbunden sein, welches in vorteilhafter Ausgestaltung am Getriebegehäuse oder der Ölwanne befestigt ist.

Das Automatgetriebe weist ferner ein hydraulisches Schaltgerät (HSG) unterhalb des Getriebes sowie einen Getriebeölfilter auf, welcher in der Ölwanne angeordnet ist. Erfindungsgemäß ist die Zusatzölpumpe bzw. die Baueinheit in Fahrtrichtung hinter dem hydraulischen Schaltgerät angeordnet.

In vorteilhafter Ausgestaltung ist der Druckanschluss der Zusatzölpumpe mit dem hydraulischen Schaltgerät und der Sauganschluss mit dem Ölfilter verbunden. Damit ergeben sich kurze Wege für den Saug- und Druckanschluss, verbunden mit einem geringen Druckabfall.

In vorteilhafter Ausgestaltung ist der elektrischen Zusatzölpumpe bzw. der Baueinheit ein Pumpensteuergerät zugeordnet, welches über Verbindungsleitungen mit dem Elektromotor verbunden ist. Das Pumpensteuergerät kann sich entweder außerhalb des Getriebegehäuses oder innerhalb der Ölwanne befinden und mit dem Elektromotor integriert sein.

Das Automatgetriebe weist ferner eine elektronische Getriebesteuerung (EGS) auf, welche innerhalb des Getriebegehäuses angeordnet und über eine Signalleitung mit dem Pumpensteuergerät verbunden ist.

Nach einer weiteren bevorzugten Ausführungsform ist die räumliche Zuordnung von Hauptölpumpe und Zusatzölpumpe derart vorgesehen, dass sich die Mittelachse der Zusatzölpumpe unterhalb der Mittelachse der Hauptölpumpe befindet. Damit ergibt sich für die Zusatzölpumpe eine geringere Saughöhe und eine erhöhte Funktionssicherheit.

Ausführungsbeispiele der Erfindung sind in der Zeichnung dargestellt und werden im Folgenden näher beschreiben. Es zeigen
Fig. 1 eine erste Anordnung einer elektrischen Zusatzölpumpe in einem Getriebe,
Fig. 2 eine zweite Anordnung einer elektrischen Zusatzölpumpe in einem Getriebe,
Fig. 3 eine dritte Anordnung einer elektrischen Zusatzölpumpe in einem Getriebe,
Fig. 4 einen Längsschnitt durch ein Automatgetriebe mit elektrischer Zusatzölpumpe und
Fig. 5 einen Querschnitt durch das Automatgetriebe mit Parksperre und elektrischer Zusatzölpumpe.

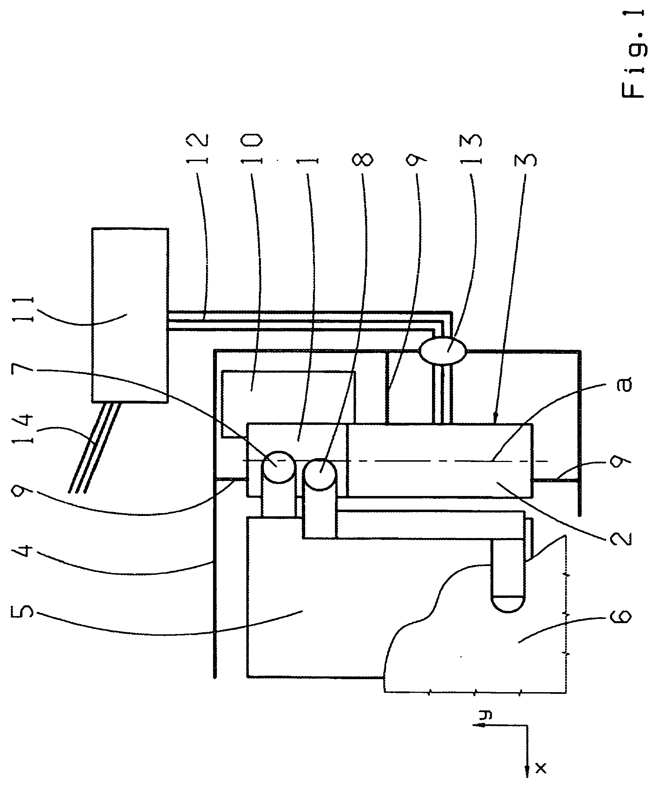

**Fig. 1** zeigt ein erstes Ausführungsbeispiel der Erfindung mit einer Anordnung einer eine Zusatzölpumpe 1 und einen Elektromotor 2 umfassenden Baueinheit 3 in einem Getriebegehäuse 4 eines Automatgetriebes für ein Kraftfahrzeug. Die Fahrtrichtung des Kraftfahrzeuges ist durch einen Koordinatenpfeil x und die Richtung quer zur Fahrtrichtung mit einem Koordinatenpfeil y gekennzeichnet. Die Baueinheit 3, auch Pumpenaggregat genannt, weist eine Längsachse a auf, welche in y-Richtung, d. h. quer zur Fahrtrichtung des Kraftfahrzeuges verläuft. Innerhalb des Getriebegehäuses 4, welches auch eine Ölwanne umfasst bzw. durch eine Ölwanne nach außen hin geschlossen ist, sind ein hydraulisches Schaltgerät (HSG) 5 sowie ein Getriebeölfilter 6 angeordnet. Die Zusatzölpumpe 1 weist einen Druckanschluss 7 auf, der mit dem hydraulischen Schaltgerät 5 verbunden ist, und einen Sauganschluss 8, welcher mit dem Getriebeölfilter 6 verbunden ist und von dort Öl ansaugt. Das Pumpenaggregat 3 ist gegenüber dem Getriebegehäuse 4 respektive der Ölwanne befestigt, beispielsweise durch drei schematisch dargestellte Streben 9. Oberhalb des Pumpenaggregats 3 (hinter der Zeichenebene) ist eine Parksperrenvorrichtung 10 schematisch angedeutet. Der Elektromotor 2 des Pumpenaggregats 3 wird durch ein Pumpensteuergerät 11, welches außerhalb des Getriebegehäuses 4 angeordnet ist, über Verbindungsleitungen 12 angesteuert und mit Strom versorgt. Die Verbindungsleitungen 12 zwischen Pumpensteuergerät 11 und Elektromotor 2 werden an einer Durchbruchstelle 13 durch das Getriebegehäuse 4 hindurchgeführt. Das Pumpensteuergerät 11 wird seinerseits fahrzeugseitig mit Strom und Signalen über Zuführleitungen 14 versorgt.

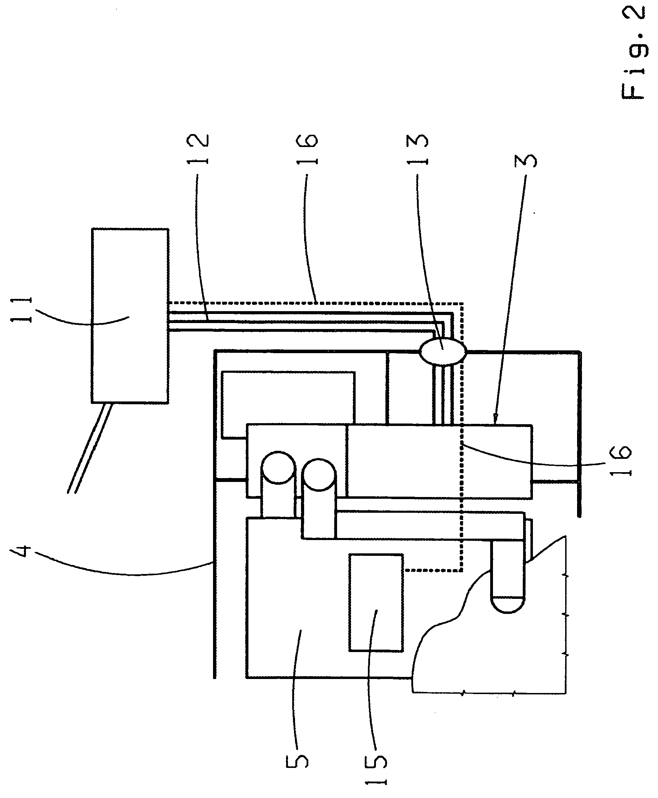

**Fig. 2** zeigt ein weiteres Ausführungsbeispiel der Erfindung für eine Anordnung des Pumpenaggregats 3 innerhalb des Getriebegehäuses 4 - für gleiche Teile werden gleiche Bezugszahlen wie zuvor verwendet. Im Unterschied zur vorherigen Ausführungsform ist innerhalb des Getriebegehäuses 4 eine elektronische Getriebesteuerung (EGS) 15 angeordnet, welche über eine (gestrichelt dargestellte) elektrische Signalleitung 16, welche durch die Durchbruchstelle 13 hindurchgeführt ist, mit dem Pumpensteuergerät 11 verbunden ist. Die EGS 15 dient hier also unter anderem auch als Signalgeber für das Pumpenaggregat 3.

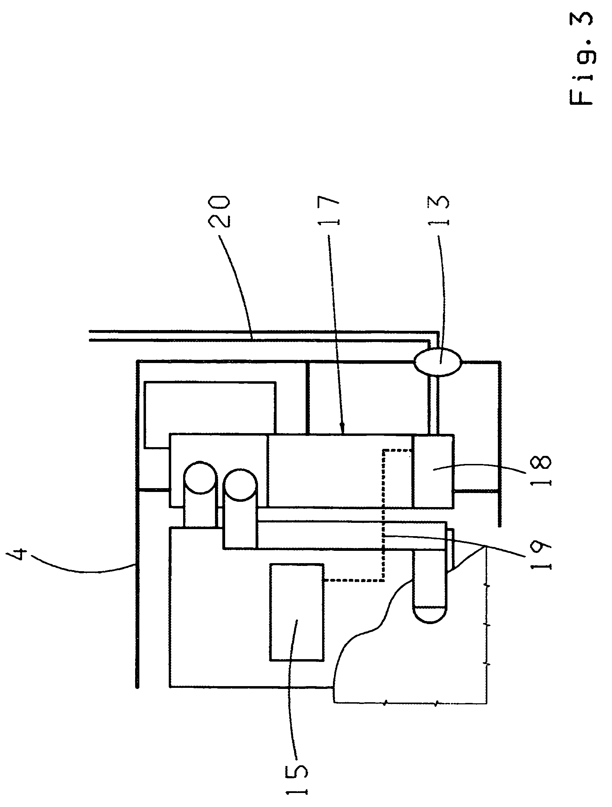

**Fig. 3** zeigt eine dritte Ausführungsform der Erfindung für die Anordnung eines Pumpenaggregats 17, in welches ein Pumpensteuergerät 18 integriert ist; letzteres befindet sich somit innerhalb des Getriebegehäuses 4 bzw. der Ölwanne. Die elektronische Getriebesteuerung 15 ist über eine innerhalb des Getriebegehäuses 4 verlaufende (gestrichelt dargestellte), elektrische Signalleitung 19 mit dem Pumpensteuergerät 18 verbunden. Die Stromzufuhr zum Pumpensteuergerät 18 erfolgt fahrzeugseitig über Leitungen 20, welche an der Durchbruchstelle 13 durch die Gehäusewand 4 hindurchgeführt sind.

Anstelle der in Fig. 3 vorgesehenen getriebeintemen Signalleitung 19, welche die EGS 15 mit dem Pumpensteuergerät 18 verbindet, kann in einer anderen Ausführungsform der Erfindung auch vorgesehen sein, dass das Pumpenaggregat 17 über eine separate Signalleitung von außerhalb des Getriebes angesteuert wird. Eine derartige separate Signalleitung kann beispielsweise eine Datenleitung (CAN) sein, die über einen Getriebestecker, über dessen elektrische Kontakte auch die elektrische Spannungsversorgung geführt wird, elektrisch mit dem Pumpensteuergerät 18 verbunden ist.

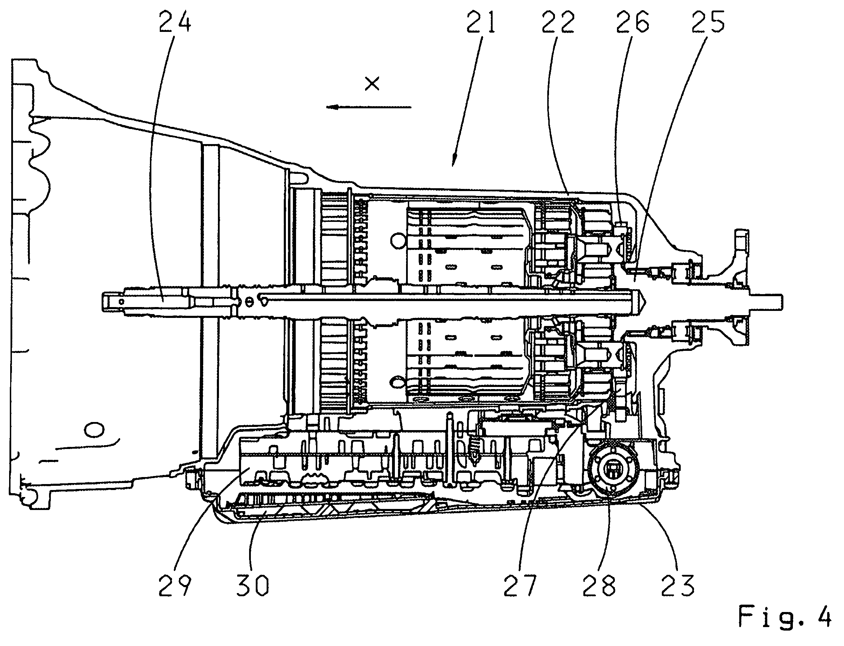

**Fig. 4** zeigt einen Längsschnitt durch ein Automatgetriebe 21, welches ein Getriebegehäuse 22 aufweist, an welches in seinem unteren Bereich eine Ölwanne 23 angeflanscht ist. Das Getriebe 21 weist eine Eingangswelle 24 und eine Abtriebswelle 25 auf, welche als Stegwelle eines Planetenradsatzes ausgebildet ist und an ihrem Umfang eine Parksperrenverzahnung 26 aufweist. Unterhalb der Abtriebswelle 25 ist eine Parksperrenklinke 27 angeordnet, welche bei Arretierung des Automatgetriebes 21 (Stellung P des Wählhebels) in die Parksperrenverzahnung 26 eingreift und das Getriebe blockiert. Die Parksperrenverzahnung 26 (Parksperrenrad) und die Parksperrenklinke 27 bilden im Wesentlichen eine Parksperrenvorrichtung. Unterhalb der Parksperrenvorrichtung 26, 27 ist ein Pumpenaggregat 28 innerhalb des Getriebegehäuses 22 bzw. innerhalb der Ölwanne 23 angeordnet. Das Pumpenaggregat 28, umfassend eine Pumpe, einen Elektromotor und gegebenenfalls ein Pumpensteuergerät, ist quer zur Fahrtrichtung, angedeutet durch einen Koordinatenpfeil x, angeordnet. In Fahrtrichtung vor dem Pumpenaggregat 28 befindet sich unterhalb der Eingangswelle 24 ein hydraulisches Schaltgerät 29 sowie ein Ölfilter 30 im untersten Bereich der Ölwanne 23.

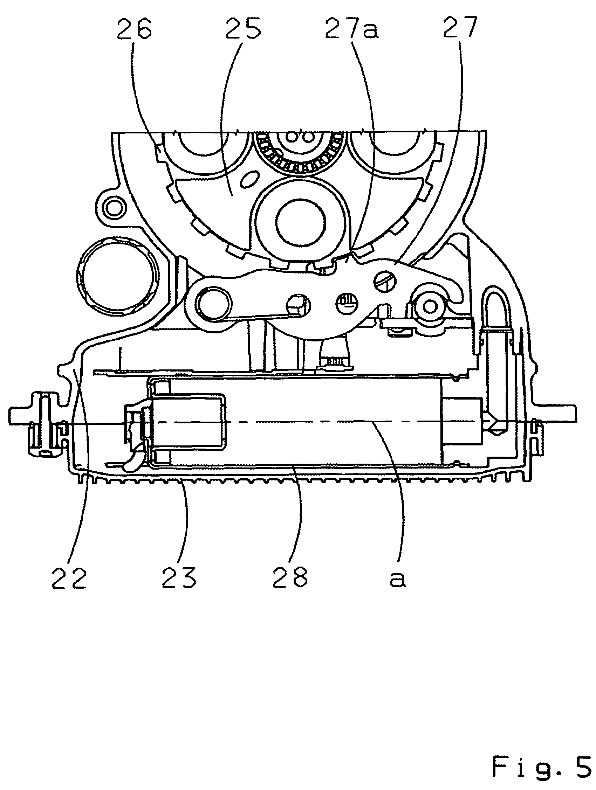

**Fig. 5** zeigt eine Teilansicht in Achsrichtung des Automatgetriebes 21 mit Blick auf die als Parkscheibe ausgebildete Stegwelle 25 mit Parksperrenverzahnung 26. Unterhalb der Parkscheibe 25 ist die Parksperrenklinke 27 angeordnet, welche mit einem Klinkenzahn 27a in eine Zahnlücke der Parksperrenverzahnung 26 eingreift und damit die Abtriebswelle 25 blockiert. Unterhalb der Parksperrenklinke 27 ist das Pumpenaggregat 28 angeordnet, dessen Längsachse (Mittelachse) a quer zur Fahrtrichtung des Kraftfahrzeuges verläuft. Das Pumpenaggregat 28 erstreckt sich annähernd über die gesamte Breite des Getriebegehäuses 22 und der Ölwanne 23. Somit ist eine gute Raumausnutzung gegeben.

### Bezugszeichen

- 1: Zusatzölpumpe
- 2: Elektromotor
- 3: Baueinheit (Pumpenaggregat)
- 4: Getriebegehäuse
- 5: Hydraulisches Schaltgerät (HSG)
- 6: Getriebeölfilter
- 7: Druckanschluss
- 8: Sauganschluss
- 9: Befestigungsstrebe
- 10: Parksperrenvorrichtung
- 11: Pumpensteuergerät
- 12: Verbindungsleitungen
- 13: Durchbruchstelle
- 14: Zuführleitungen
- 15: Elektronische Getriebesteuerung (EGS)
- 16: Signalleitung
- 17: Pumpenaggregat
- 18: Pumpensteuergerät
- 19: Signalsteuerung
- 20: Stromzuführleitungen
- 21: Automatgetriebe
- 22: Getriebegehäuse
- 23: Ölwanne
- 24: Eingangswelle
- 25: Abtriebswelle
- 26: Parksperrenverzahnung
- 27: Parksperrenklinke
- 27a: Klinkenzahn
- 28: Pumpenaggregat
- 29: Hydraulisches Schaltgerät (HSG)
- 30: Ölfilter

## Patentansprüche

1. Automatgetriebe eines durch eine Brennkraftmaschine angetriebenen Kraftfahrzeuges mit einem Getriebeölkreislauf, einer mechanischen, von der Brennkraftmaschine antreibbaren Hauptölpumpe und einer elektrisch antreibbaren, innerhalb einer Ölwanne (4, 23) angeordneten Zusatzölpumpe (1), **dadurch gekennzeichnet, dass** die Zusatzölpumpe (1) quer zur Fahrtrichtung (x) des Kraftfahrzeuges angeordnet ist, dass das Automatgetriebe eine Parksperrenvorrichtung (10; 25, 26, 27) aufweist, und dass die Zusatzölpumpe (1) unterhalb der Parksperrenvorrichtung (26, 27) angeordnet ist.

2. Automatgetriebe nach Anspruch 1, **dadurch gekennzeichnet, dass** die Zusatzölpumpe (1) mit einem Elektromotor (2) zu einer Baueinheit (3) verbunden ist.

3. Automatgetriebe nach Anspruch 1 oder 2, **dadurch gekennzeichnet, dass** das Automatgetriebe ein Getriebegehäuse (4, 22) aufweist, an dessen Unterseite die Ölwanne (23) angeflanscht ist und dass die Zusatzölpumpe (1) respektive die Baueinheit (3) am Getriebegehäuse (4, 22) und/oder der Ölwanne (23) befestigt ist.

4. Automatgetriebe nach Anspruch 1, 2 oder 3, dadurch **gekennze**i **chnet**, dass das Automatgetriebe ein hydraulisches Schaltgerät (5, 29) umfasst und dass die Zusatzölpumpe (1) respektive die Baueinheit (3) in Fahrtrichtung hinter dem hydraulischen Schaltgerät (5, 29) angeordnet ist.

5. Automatgetriebe nach Anspruch (4), **dadurch gekennzeichnet, dass** die Zusatzölpumpe (1) einen Druckanschluss (7) aufweist, welcher mit dem hydraulischen Schaltgerät (5, 29) verbunden ist.

6. Automatgetriebe nach Anspruch 4 oder 5, **dadurch gekennzeichnet, dass** unterhalb des hydraulischen Schaltgerätes (5, 29) ein Getriebeölfilter (6, 30) angeordnet ist und dass die Zusatzölpumpe (1) einen Sauganschluss (8) aufweist, der mit dem Getriebeölfilter (6, 30) verbunden ist.

7. Automatgetriebe nach einem der Ansprüche 1 bis 6, **dadurch gekennzeichnet, dass** der Elektromotor (2) mit einem Pumpensteuergerät (11, 18) verbunden ist.

8. Automatgetriebe nach Anspruch 7, **dadurch gekennzeichnet, dass** das Pumpensteuergerät (11) außerhalb des Getriebegehäuses (4, 22) angeordnet ist und dass Verbindungsleitungen (12) vom Pumpensteuergerät (11) zum Elektromotor (2) durch das Getriebegehäuse (4) geführt sind.

9. Automatgetriebe nach Anspruch7, **dadurch gekennzeichnet, dass** das Pumpensteuergerät (18) innerhalb des Getriebegehäuses (4, 22) und/oder der Ölwanne (23) angeordnet ist.

10. Automatgetriebe nach Anspruch 9, **dadurch gekennzeichnet, dass** das Pumpensteuergerät (18) in den Elektromotor (2) integriert ist.

11. Automatgetriebe nach einem der Ansprüche 1 bis 10, **dadurch gekennzeichnet, dass** die Zusatzölpumpe (1) respektive die Baueinheit (3) und die Hauptölpumpe jeweils Mittelachsen (a) aufweisen, und dass die Mittelachse (a) der Zusatzölpumpe (1) respektive der Baueinheit (3) unterhalb der Mittelachse der Hauptölpumpe angeordnet ist.

12. Automatgetriebe nach einem der Ansprüche 1 bis 11, dadurch **ge - kennzeichnet,** dass das Automatgetriebe eine elektronische Getriebesteuerung (15) mit mindestens einer Signalleitung (16, 19) umfasst, welche mit dem Pumpensteuergerät (11, 18) verbunden ist.

## Claims

1. Automatic transmission of a motor vehicle which is driven by way of an internal combustion engine, having a transmission oil circuit, a mechanical main oil pump which can be driven by the internal combustion engine, and an additional oil pump (1) which can be driven electrically and is arranged within an oil sump (4, 23), **characterized in that** the additional oil pump (1) is arranged transversely with respect to the driving direction (x) of the motor vehicle, **in that** the automatic transmission has a parking lock apparatus (10; 25, 26, 27), and **in that** the additional oil pump (1) is arranged below the parking lock apparatus (26, 27).

2. Automatic transmission according to Claim 1, **characterized in that** the additional oil pump (1) is connected to an electric motor (2) to form one structural unit (3).

3. Automatic transmission according to Claim 1 or 2, **characterized in that** the automatic transmission has a transmission housing (4, 22), to the underside of which the oil sump (23) is flange-connected, and **in that** the additional oil pump (1) or the structural unit (3) is fastened to the transmission housing (4, 22) and/or the oil sump (23).

4. Automatic transmission according to Claim 1, 2 or 3, **characterized in that** the automatic transmission comprises a hydraulic shifting unit (5, 29), and **in that** the additional oil pump (1) or the structural unit (3) is arranged behind the hydraulic shifting unit (5, 29) in the driving direction.

5. Automatic transmission according to Claim 4, **characterized in that** the additional oil pump (1) has a pressure connector (7) which is connected to the hydraulic shifting unit (5, 29).

6. Automatic transmission according to Claim 4 or 5, **characterized in that** a transmission oil filter (6, 30) is arranged below the hydraulic shifting unit (5, 29), and **in that** the additional oil pump (1) has a suction connector (8) which is connected to the transmission oil filter (6, 30).

7. Automatic transmission according to one of Claims 1 to 6, **characterized in that** the electric motor (2) is connected to a pump control unit (11, 18).

8. Automatic transmission according to Claim 7, **characterized in that** the pump control unit (11) is arranged outside the transmission housing (4, 22), and **in that** connecting lines (12) from the pump control unit (11) to the electric motor (2) are conducted through the transmission housing (4).

9. Automatic transmission according to Claim 7, **characterized in that** the pump control unit (18) is arranged within the transmission housing (4, 22) and/or the oil sump (23).

10. Automatic transmission according to Claim 9, **characterized in that** the pump control unit (18) is integrated into the electric motor (2).

11. Automatic transmission according to one of Claims 1 to 10, **characterized in that** the additional oil pump (1) or the structural unit (3) and the main oil pump in each case have centre axes (a), and **in that** the centre axis (a) of the additional oil pump (1) or the structural unit (3) is arranged below the centre axis of the main oil pump.

12. Automatic transmission according to one of Claims 1 to 11, **characterized in that** the automatic transmission comprises an electronic transmission controller (15) with at least one signal line (16, 19) which is connected to the pump control unit (11, 18).

## Revendications

1. Boîte de vitesses automatique d'un véhicule automobile entraîné par un moteur à combustion interne avec un circuit d'huile de boîte de vitesses, une pompe à huile principale pouvant être entraînée par le moteur à combustion interne et une pompe à huile supplémentaire (1) pouvant être entraînée électriquement disposée à l'intérieur d'un carter d'huile (4, 23), **caractérisée en ce que** la pompe à huile supplémentaire (1) est disposée transversalement à la direction de conduite (x) du véhicule automobile, que la boîte de vitesses automatique comporte un dispositif de verrouillage en stationnement (10 ; 25, 26, 27) et que la pompe à huile supplémentaire (1) est disposée en dessous du dispositif de verrouillage en stationnement (26, 27).

2. Boîte de vitesses automatique selon la revendication 1, **caractérisée en ce que** la pompe à huile supplémentaire (1) est reliée à un moteur électrique (2) pour former une unité de construction (3).

3. Boîte de vitesses automatique selon la revendication 1 ou 2, **caractérisée en ce que** la boîte de vitesses automatique comporte un carter de boîte de vitesses (4, 22) au niveau du côté inférieur duquel le carter d'huile (23) est bridé et que la pompe à huile supplémentaire (1) et/ou respectivement l'unité de construction (3) sont fixés au carter de boîte de vitesses (4, 22) et/ou au carter d'huile (23).

4. Boîte de vitesses automatique selon la revendication 1, 2 ou 3, **caractérisée en ce que** la boîte de vitesses automatique comprend un appareil de changement de vitesse (5, 29) hydraulique et que la pompe à huile supplémentaire (1) et/ou respectivement l'unité de construction (3) sont disposées dans la direction de conduite derrière l'appareil de changement de vitesse (5, 29) hydraulique.

5. Boîte de vitesses automatique selon la revendication (4), **caractérisée en ce que** la pompe à huile supplémentaire (1) comporte un raccord de pression (7) relié à l'appareil de changement de vitesse (5, 29) hydraulique.

6. Boîte de vitesses automatique selon la revendication 4 ou 5, **caractérisée en ce qu'**un filtre d'huile de boîte de vitesses (6, 30) est disposé sous l'appareil de changement de vitesse (5, 29) hydraulique et que la pompe à huile supplémentaire (1) comporte un raccord d'aspiration (8) relié au filtre d'huile de boîte de vitesses (6, 30).

7. Boîte de vitesses automatique selon l'une quelconque des revendications 1 à 6, **caractérisée en ce que** le moteur électrique (2) est relié à un appareil de commande de pompe (11, 18).

8. Boîte de vitesses automatique selon la revendication 7, **caractérisée en ce que** l'appareil de commande de pompe (11) est disposé à l'extérieur du carter de boîte de vitesses (4, 22) et que des câbles de liaison (12) allant de l'appareil de commande de pompe (11) au moteur électrique (2) sont guidés à travers le carter de boîte de vitesses (4).

9. Boîte de vitesses automatique selon la revendication 7, **caractérisée en ce que** l'appareil de commande de pompe (18) est disposé à l'intérieur du carter de boîte de vitesses (4, 22) et/ou du carter d'huile (23).

10. Boîte de vitesses automatique selon la revendication 9, **caractérisée en ce que** l'appareil de commande de pompe (18) est intégré dans le moteur électrique (2).

11. Boîte de vitesses automatique selon l'une quelconque des revendications 1 à 10, **caractérisée en ce que** la pompe à huile supplémentaire (1) et/ou respectivement l'unité de construction (3) et la pompe à huile principale comportent respectivement des axes centraux (a) et que l'axe central (a) de la pompe à huile supplémentaire (1) et/ou respectivement de l'unité de construction (3) est disposé en dessous de l'axe central de la pompe à huile principale.

12. Boîte de vitesses automatique selon l'une quelconque des revendications 1 à 11, **caractérisée en ce que** la boîte de vitesses automatique comprend une commande électronique de boîte de vitesses (15) avec au moins un câble de transmission de signal (16, 19) relié à l'appareil de commande de pompe (11, 18).
